Europäisches Patentamt

European Patent Office

Office européen des brevets

(19)

(11) Veröffentlichungsnummer: **0 349 079**
**A2**

(12) **EUROPÄISCHE PATENTANMELDUNG**

(21) Anmeldenummer: **89201680.9**

(51) Int. Cl.⁴: **H04Q 11/04**

(22) Anmeldetag: **26.06.89**

(30) Priorität: **01.07.88 DE 3822263**

(43) Veröffentlichungstag der Anmeldung:
**03.01.90 Patentblatt 90/01**

(84) Benannte Vertragsstaaten:
**DE FR GB SE**

(71) Anmelder: **Philips Patentverwaltung GmbH**
**Wendenstrasse 35 Postfach 10 51 49**
**D-2000 Hamburg 1(DE)**

(84) **DE**

Anmelder: **N.V. Philips' Gloeilampenfabrieken**
**Groenewoudseweg 1**
**NL-5621 BA Eindhoven(NL)**

(84) **FR GB SE**

(72) Erfinder: **Meyer, Franz**
**Flurstrasse 35**
**D-8547 Greding(DE)**
Erfinder: **Noll, Joachim, Dr.**
**Harksheider Weg 95d**
**D-2085 Quickborn(DE)**
Erfinder: **Riekmann, Dieter**
**Halstenbeker Strasse 4**
**D-2080 Pinneberg(DE)**

(74) Vertreter: **Poddig, Dieter, Dipl.-Ing. et al**
**Philips Patentverwaltung GmbH**
**Wendenstrasse 35 Postfach 10 51 49**
**D-2000 Hamburg 1(DE)**

(54) **Schaltungsanordnung zum Übertragen von Informationen.**

(57) Im ISDN-System sind auf beiden Seiten der Übertragungsstrecke komplexe Leitungsanpassungs-schaltungen vorgesehen, die ein umfangreiches Protokoll verarbeiten. Diese Schaltungen sind in zwei Teilschaltungen unterteilt, die über eine festgelegte Schnittstelle miteinander verbunden sind. Die der Übertragungsstrecke zugewandte Teilschaltung muß jedoch abhängig vom Übertragungsmedium erheblich unterschiedlich aufgebaut werden. Für einen einheitlicheren Aufbau wird nun vorgeschlagen, diese Teilschaltung in zwei Unterteilschaltungen aufzuteilen, die über eine neu geschaffene, einfache binäre Schnittstelle miteinander verbunden sind. Damit braucht nur die der Übertragungsstrecke zugewandte Unterteilanordnung speziell auf das Übertragungsmedium, beispielsweise Glasfaserleitungen, ausgelegt zu sein, während die Protokollverwaltung in der anderen Unterteilanordnung erfolgt, die unabhängig vom Übertragungsmedium immer gleich aufgebaut ist. Es wird außerdem eine zweckmäßige Rahmenstruktur der neu geschaffenen binären Schnittstelle angegeben, in die die von der anderen Teilanordnung gelieferten Daten umgesetzt werden, sowie die Verarbeitung von Übertragungsfehlermeldungen.

Fig.1b

## Schaltungsanordnung zum Übertragen von Informationen

Die Erfindung betrifft eine Schaltungsanordnung zum Übertragen von Informationen zwischen mindestens einer Teilnehmer-Anschlußstelle und einer Vermittlungsstelle über eine Übertragungsstrecke, die über Anpassungsschaltungen an die Anschlußstelle und an die Vermittlungsstelle angeschlossen ist, wobei die Anpassungsschaltungen je aus zwei Teilanordnungen bestehen, die über eine einheitliche erste Schnittstelle miteinander verbunden sind und von denen die erste, der Übertragungsstrecke zugewandte Teilanordnung für beide Anpassungsschaltungen im wesentlichen gleich ist und die physikalische Anpassung an das Übertragungsmedium enthält.

Eine derartige Schaltungsanordnung für ein sogenanntes ISDN-Kommunikationsnetz ist z.B. bekannt aus der Broschüre der Firma SIEMENS "ICs for Telecommunications, IOM, ISDN Oriented Modular Interface, Interface Description". Darin wird vor allem die erste Schnittstelle zwischen den beiden Teilanordnungen beschrieben. Die erste Teilanordnung ist dabei speziell für ein Kupferkabel als Übertragungsmedium ausgebildet und überträgt darüber die digitale Information als ternäre Signale und enthält die dafür notwendigen Umsetzanordnungen und Leitungsverstärker. Ferner sind darin Verarbeitungs- und Umsetzeinrichtungen zum Verarbeiten der über die erste Schnittstelle übertragenen Steuersignale und zum Umsetzen der ebenfalls darüber übertragenen Daten in das ternäre Leitungssignal und umgekehrt enthalten, so daß die erste Teilanordnung kompliziert aufgebaut ist. Für die Verwendung einer Glasfaserstrecke als Übertragungsmedium muß eine neue, ähnlich kompliziert aufgebaute Teilanordnung entwickelt werden.

Aufgabe der Erfindung ist es, eine Schaltungsanordnung der eingangs genannten Art anzugeben, die mit wenig Aufwand an verschiedene Übertragungsmedien, insbesondere an Glasfaserkabel, angepaßt werden kann.

Diese Aufgabe wird erfindungsgemäß dadurch gelöst, daß die erste Teilanordnung aus zwei Unterteilanordnungen besteht, die über eine zweite Schnittstelle miteinander verbunden sind und von denen die erste Unterteilanordnung die Informationen von der ersten Schnittstelle in ein binäres Sendesignal für die zweite Schnittstelle und ein binäres Empfangssignal der zweiten Schnittstelle in die für die erste Schnittstelle erforderliche Form umsetzt und die zweite Unterteilanordnung spezifisch für das Übertragungsmedium ausgebildet ist und mit dem binären Sendesignal der zweiten Schnittstelle das Übertragungsmedium ansteuert und aus den Signalen des Übertragungsmediums die binären Empfangssignale für die zweite Schnittstelle bildet.

Durch die Aufteilung der ersten Teilanordnung in zwei Unterteilanordnungen wird also erreicht, daß für verschiedene Übertragungsmedien lediglich eine entsprechende zweite Unterteilanordnung verwendet werden muß, die aber einfach aufgebaut ist, da die neu geschaffene zweite Schnittstelle zwischen den beiden Unterteilanordnungen lediglich die unmittelbaren Sende- und Empfangsinformationen als binäre Information überträgt, während die komplexe Verarbeitung der Informationen der ersten Schnittstelle in der ersten Unterteilanordnung erfolgt, die nunmehr unabhängig vom Übertragungsmedium ist.

Bei Verwendung der erfindungsgemäßen Schaltungsanordnung in einem ISDN-Kommunikationsnetz ist es aus der eingangs genannten Literaturstelle bekannt, daß die über die erste Schnittstelle übertragenen Informationen in aufeinanderfolgenden ersten Rahmen mit je mehreren Datenwörtern gegliedert ist, die je einen Informationskanal bilden, von denen mindestens ein Kanal als Steuerkanal Steuerinformationen enthält. Dabei wird die Rahmenstruktur der über die Schnittstelle übertragenen Information durch entsprechende mitübertragene Rahmentaktsignale bestimmt. Eine derartige Steuerung der Rahmenstruktur ist bei der über die zweite Schnittstelle übertragenen Information jedoch nicht leicht möglich, so daß die Rahmenstruktur auf andere Weise gebildet werden muß. Nach einer Ausgestaltung der erfindungsgemäßen Schaltungsanordnung ist es daher zweckmäßig, daß die erste Unterteilanordnung die über die erste Schnittstelle übertragene Information für die zweite Schnittstelle in vom ersten Rahmen abweichende zweite Rahmen umsetzt, deren Länge je ein Vielfaches der Länge eines ersten Rahmens beträgt und in dem zumindest ein Teil der Steuerinformation unterdrückt ist und in dem an mindestens einer vorgegebenen Stelle eine Synchronisierinformation enthalten ist. Dabei ist berücksichtigt, daß ein Teil der Steuerinformation innerhalb der über die erste Schnittstelle übertragene Information nur für Steuerungsmaßnahmen innerhalb der ersten Teilanordnung verwendet wird, so daß diese Information über die zweite Schnittstelle nicht übertragen werden muß. Statt dessen wird also eine Umsetzung der Rahmen derart angewendet, daß nunmehr anstelle der unterdrückten Steuerinformation eine Synchronisierinformation in den über die zweite Schnittstelle und damit auch über das Übertragungsmedium übertragenen Rahmen vorhanden ist. Die Rekonstruktion der Rahmenstruktur für die erste Schnittstelle erfolgt dann in der zweiten Unterteilanordnung.

Bei der bekannten Schaltungsanordnung zur Anwendung im ISDN-Kommunikationsnetz, wobei der erste Rahmen zwei Nutzkanäle und zwei Steuerkanäle mit je gleich langen Datenwörtern enthält, von denen der eine Steuerkanal erste Steuerinformation zur Steuerung vorgegebener Funktionen der ersten Teilanordnung überträgt, ist es nach einer weiteren Ausgestaltung der Erfindung zweckmäßig, daß die Länge des zweiten Rahmens ein ganzzahliges Vielfaches der Länge des ersten Rahmens ist und je dieses Vielfache die Datenwörter der Nutzkanäle und des anderen Steuerkanals sowie Synchronisierinformationen enthält. Auf diese Weise ist die Taktfrequenz bzw. die Bitfrequenz auf beiden Schnittstellen gleich.

Die Synchronisierinformation sollte derart gebildet sein, daß mit dem Empfang der ersten Synchronisierinformation bei einer Übertragung sofort eine Rahmensynchronisation möglich ist, d.h. die Synchronisierinformation muß eindeutig sein und darf nicht durch Nutzinformation vorgetäuscht werden können. Hierfür ist es zweckmäßig, daß zwischen je zwei aufeinanderfolgenden Datenwörtern sowie zwischen diesen und einem in jedem Rahmen gleichen Synchronisierwort ein Bit mit dem einen binären Wert eingefügt ist und daß das Synchronisierwort mindestens ein Bit länger ist als jedes Datenwort und nur Bits des anderen binären Werts aufweist. Es ist zwar aus der DE-PS 23 51 478 bekannt, zwischen die Datenwörter eines Rahmens Impulse mit bestimmtem Wert einzufügen, so daß zunächst eine Synchronisation auf diese eingefügten Impulse erfolgen kann, wodurch die Grenzen der einzelnen Datenwörter im Rahmen bekannt sind. Da das Rahmensynchronisierwort jedoch durch Nutzinformation nachgebildet werden kann, ist es bei dem bekannten Verfahren erforderlich, das Rahmensynchronisierwort mehrere Male nacheinander zu empfangen, bevor die Rahmensynchronisation erfolgt ist. Aus der DE-OS 26 43 149 ist es ferner bekannt, das Synchronisierwort länger als die anderen Datenwörter zu bilden, um somit eine eindeutige Bitkombination bilden zu können. Gemäß der vorgenannten Ausgestaltung der erfindungsgemäßen Schaltungsanordnung ist jedoch möglich, das Synchronisierwort nur wenig länger als ein Datenwort zu wählen, um eine eindeutige, durch Nutzinformation nicht nachzubildende Synchronisierinformation zu erhalten.

Die zweite, mit dem Übertragungsmedium verbundene Unterteilanordnung enthält die für das Aussenden der Information über das Übertragungsmedium erforderlichen Verstärker, die allgemein wesentliche elektrische Leistung verbrauchen und Wärme erzeugen. Um beides zu begrenzen, ist es nach einer weiteren Ausgestaltung der Erfindung zweckmäßig, daß die erste Unterteilanordnung bei einer ersten vorgegebenen Steuerinformation im Steuerkanal ein Aktivierungssignal an einem getrennten Anschluß erzeugt und auf einer weiteren Verbindung an die zweite Unterteilanordnung überträgt, insbesondere zum Einschalten von darin enthaltenen Sendeanordnungen. Wie sich aus der eingangs genannten Broschüre der Firma Siemens aus den dort beschriebenen Vorgängen beim Verbindungsaufbau sowohl von der Teilnehmerseite her als auch von der Vermittlungsstelle her ergibt, erhält die erste Unterteilanordnung stets über die erste Schnittstelle entsprechende Information, die den Beginn einer Übertragung signalisieren, so daß diese daraus leicht ein entsprechendes Aktivierungssignal erzeugen kann.

In entsprechender Weise ist es zweckmäßig, daß die erste Unterteilanordnung bei zweiten vorgegebenen Steuerinformationen im Steuerkanal mindestens ein weiteres Steuersignal erzeugt und an einem weiteren getrennten Anschluß abgibt. Derartige weitere Steuersignale können günstig verwendet werden, beispielsweise zum Schalten einer Schleife, um im Fehlerfall in an sich bekannter Weise den Fehlerort besser lokalisieren zu können. Im wesentlichen reicht es also aus, nur ein weiteres Steuersignal zu erzeugen, um den Aufwand und die Anzahl Anschlüsse der ersten Unterteilanordnung niedrig zu halten. Um in bestimmten Fällen mehr Steuersignale oder diese an solchen Stellen zur Verfügung zu haben, wo die erste und die zweite Unterteilanordnung räumlich weiter getrennt sind, ist es zweckmäßig, daß die erste Unterteilanordnung in einen Monitor-Betriebsmodus schaltbar ist zum Auswerten ausschließlich der Empfangssignale der zweiten Schnittstelle. In diesem Falle arbeitet die erste Unterteilanordnung nicht als Umsetzer zwischen erster und zweiter Schnittstelle, sondern lediglich zum Erzeugen von Steuersignalen. Dafür ist dann also kein gesonderter, anders aufgebauter Baustein erforderlich.

Bei jeder Übertragung ist es möglich, daß Fehler auftreten. Ein völliger Zusammenbruch einer Übertragungsstrecke, beispielsweise durch eine Unterbrechung, ist relativ leicht festzustellen. Es kommt jedoch auch vor, daß Fehler nur gelegentlich auftreten, was ebenfalls erfaßt und ausgewertet werden muß. Hierfür ist es zweckmäßig, daß die erste Unterteilanordnung einen gesonderten Fehlereingangsanschluß und einen Fehlerzähler aufweist, der mindestens von der zweiten Unterteilanordnung bei detektierten Übertragungsfehlern darin erzeugte Fehlersignale über den gesonderten Fehlereingang empfängt und zählt und dessen Zählerinhalt durch dritte vorgegebene, über die erste Schnittstelle empfangene Steuerinformation über den Steuerkanal dieser Schnittstelle auslesbar und löschbar ist. Die zweite Unterteilanordnung kann Übertragungsfehler beispielsweise durch Überprüfen bestimmter Codevorschriften im empfangenen Signal feststellen. Wenn der Zählerinhalt periodisch ausgelesen und ausgewertet wird, kann bereits der Beginn einer ernsthaften Störung der Übertragungsstrecke rechtzeitig festgestellt werden.

Das Auswerten der Fehleranzahl pro Zeiteinheit ist im wesentlichen nur auf der Seite der Vermittlungsstelle zweckmäßig, da praktisch nur von dieser Seite aus Maßnahmen zur näheren Untersuchung des Fehlers eingeleitet werden können. Um jedoch auch die auf der Teilnehmerseite bei der Übertragung aufgetretenen Fehler auswerten zu können, ist es zweckmäßig, daß die erste Unterteilanordnung einen Fehlerzähler aufweist, der mindestens jedes über die zweite Schnittstelle empfangene Fehler-Steuersignal zählt und dessen Zählerinhalt durch dritte vorgegebene, über die erste Schnittstelle empfangene Steuerinformation über den Steuerkanal dieser Schnittstelle auslesbar und löschbar ist. Dieses im Steuerkanal empfangene Fehler-Steuersignal wird also teilnehmerseitig erzeugt und übertragen, so daß die Fehlersummierung nur vermittlungsseitig erfolgt und dort ausgewertet wird. In der Unterteilanordnung auf der Teilnehmerseite wird also der Fehlerzähler nicht verwendet. Dies erspart die Übertragung eines Fehlerzählerinhalts über die Übertragungsstrecke, da in der dort vorgesehenen Rahmenstruktur der übertragenen Informationen keine Stelle im Steuerkanal für eine derartige Fehlerzählerinformation vorgesehen ist.

In der ersten Unterteilanordnung kann für die Zählung von Fehlern auf der Vermittlungsseite und auf der Teilnehmerseite je ein getrennter Fehlerzähler verwendet werden. Für die Lokalisierung der Fehlerstelle ist dies jedoch nicht besonders aussagekräftig, sondern diese muß mit anderen, bekannten Mitteln festgestellt werden. Es ist daher zweckmäßig, daß nur ein Fehlerzähler vorgesehen ist, der sowohl Fehlersignale als auch Fehler-Steuersignale zählt. Dadurch werden also die Fehler auf der gesamten Übertragungsstrecke einschließlich der Anpassungsschaltungen gemeinsam aufsummiert.

Die von den ersten Unterteilanordnungen auszuführenden Funktionen sind auf der Vermittlungsseite und auf der Teilnehmerseite etwas unterschiedlich. Es ist daher zweckmäßig, daß die erste Unterteilanordnung außer in den Monitor-Betriebsmodus in einen von zwei weiteren Betriebsmodi schaltbar ist, wobei im EX-Modus als dem einen weiteren Betriebsmodus der Fehlerzähler weiter schaltbar und auslesbar ist und in einem NT-Modus als dem anderen weiteren Betriebsmodus ein von der zweiten Unterteilanordnung zugeführtes Fehlersignal in ein Fehlersignal in ein Fehler-Steuersignal im Steuerkanal der zweiten Schnittstelle umsetzbar ist. Das Schalten bzw. Einstellen in einen dieser Betriebsmodi kann beispielsweise dadurch erfolgen, daß zusätzliche Anschlüsse vorgesehen sind, die abhängig von der Stelle, an der die Unterteilanordnung eingesetzt wird, fest mit Signalspannungen verbunden werden. Außer der Verarbeitung der Fehlersignale können dabei noch weitere unterschiedliche Funktionen eingestellt werden.

Ausführungsbeispiele der Erfindung werden nachstehend anhand der Zeichnung näher erläutert. Es zeigen:

Fig. 1a und 1b eine vollständige Übertragungsstrecke zwischen Teilnehmer-Anschlußstelle und Vermittlungsstelle in herkömmlicher Weise und gemäß der Erfindung,

Fig. 2 ein Beispiel für die Umsetzung der Rahmenstruktur der ersten Schnittstelle auf eine andere Rahmenstruktur der zweiten Schnittstelle,

Fig. 3 ein Blockschaltbild einer zweiten Unterteilanordnung,

Fig. 4 das Blockschaltbild einer Anordnung für Breitbandverkehr und mit abgesetzter zweiter Unterteilanordnung.

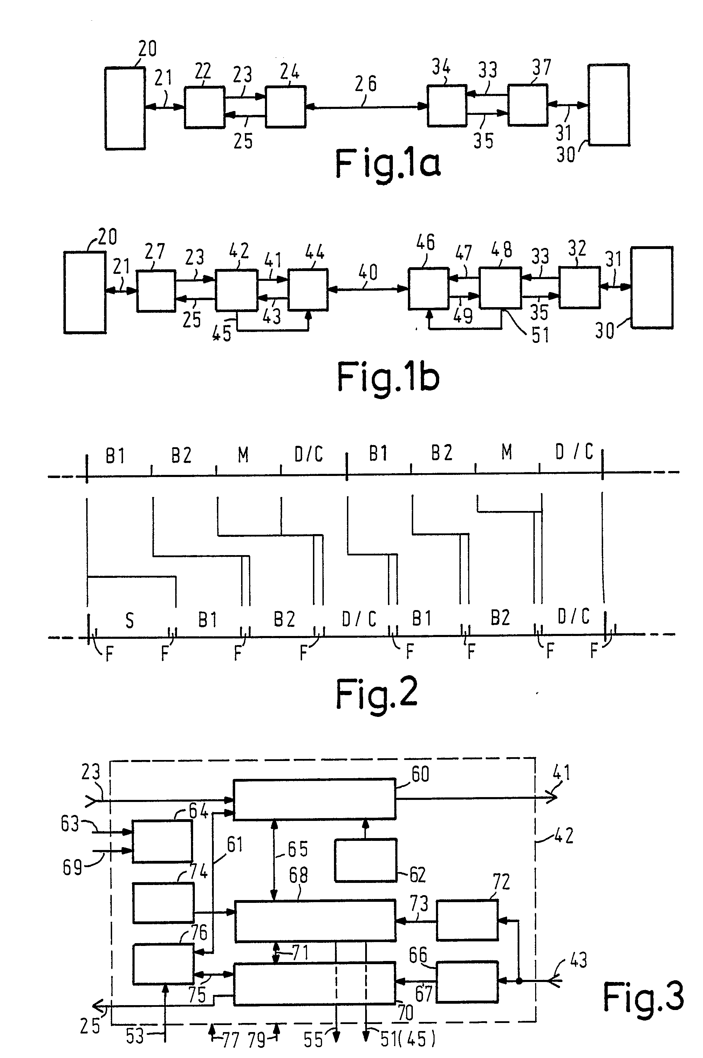

In Fig. 1a ist die Verbindung einer durch den Block 20 symbolisch dargestellten Teilnehmer-Anschlußstelle mit einer durch den Block 30 angedeuteten Vermittlungsstelle dargestellt. Die räumliche Entfernung zwischen Teilnehmer 20 und Vermittlung 30 wird im wesentlichen durch die Übertragungsstrecke 26 überbrückt, die hier in Form eines Kupferkabels, genauer in Form einer üblichen Doppelleitung angenommen wird. Die Übertragungsstrecke 26 ist auf beiden Seiten durch Anpassungsschaltungen abgeschlossen, die auf der einen Seite durch die Blöcke 22 und 24 und auf der anderen Seite durch die Blöcke 32 und 34 angegeben sind. Die Anpassungsschaltung 22/24 ist mit dem Teilnehmer 20 über eine Leitung 21 verbunden, die in üblicher Weise als Vierdraht-Leitung ausgeführt ist. Entsprechend ist die Vermittlungsstelle 30 mit der Anpassungsschaltung 32/34 über die Leitung 31 verbunden.

Die Anpassungsschaltungen an beiden Enden der Übertragungsstrecke 26 bestehen nun aus jeweils zwei Teilanordnungen 22 und 24 bzw. 32 und 34, von denen die jeweils erste Teilanordnung 24 bzw. 34 auf beiden Seiten gleich aufgebaut ist, während die jeweils zweite Teilanordnung 22 bzw. 32 speziell für die Teilnehmerseite bzw. die Vermittlungsseite ausgebildet ist. Die jweils zusammengehörigen Teilanordnungen 22 und 24 bzw. 32 und 34 sind über eine Schnittstelle miteinander verbunden, die durch die leitungen 23 und 25 bzw. 33 und 35 gebildet ist. Die Anordnung der über diese Schnittstelle übertragenen Daten ist bei beiden Anpassungsschaltungen 22/24 und 32/34 gleich, weshalb die ersten Teilanordnungen 24 und 34 tatsächlich gleich ausgebildet sein können.

Die über jede dieser Leitungen übertragenen Daten sind in einer Rahmenstruktur gegliedert, die in Fig. 2 oben angegeben ist. Dabei sind in Fig. 2 zwei aufeinanderfolgende Rahmen angegeben, von denen jeder vier Datenwörter umfaßt, die hier acht Bit lang sind. Die Folge jeweils eines Datenwortes in aufeinanderfolgenden Rahmen stellt in üblicher Weise einen Kanal dar. Die Datenwörter B1 und B2 gehören dabei zu zwei Nutzkanälen, in denen Informationen von der Teilnehmerstelle zur Vermittlungsstelle bzw. umgekehrt übertragen werden. Ferner enthält jeder Rahmen einen Monitorkanal M, über den Steuerinformationen übertragen werden, die zur Steuerung der ersten Teilanordnung durch die zweite bzw. umgekehrt vorgesehen sind. Ferner ist ein weiterer Steuerkanal D/C vorgesehen, bei dem einige Bits der Datenwörter dieses Kanals außerdem zur Übertragung schmalbandiger Zusatzinformation über die Übertragungsstrecke 26 dienen. Der D/C-Kanal stellt tatsächlich einen weiteren Nutzinformationskanal auf der Übertragungsstrecke 26 dar, während der Kanal M im wesentlichen Daten enthält, die jeweils nur innerhalb der jeweiligen Anpassungsschaltung von Bedeutung ist und lediglich aus Gründen der Einfachheit über die Übertragungsstrecke 26 mit übertragen werden.

Die ersten Teilanordnungen 24 und 34 auf beiden Seiten der Übertragungsstrecke 26 enthalten auch die Anpassungsschaltungen an die Übertragungsstrecke, beispielsweise die Leitungstreiber, wenn die Übertragungsstrecke 26 als Zweidrahtleitung ausgebildet ist. Außerdem enthalten die ersten Teilanordnungen Entzerrungsschaltungen, insbesondere Echo-Kompensatoren für die Zweidrahtleitung 26, über die die Information in beiden Richtungen gleichzeitig in einer ternären Kodierung übertragen wird, um die nutzbare Bandbreite der Kupferkabel der Übertragungsstrecke 26 besser auszunutzen.

Wenn nun die Übertragungsstrecke durch eine Glasfaserverbindung ersetzt werden soll, können die ersten Teilschaltungen 24 bzw. 34 nicht mehr verwendet werden, sondern es müssen neue Teilschaltungen entwickelt werden, die nicht nur den Lichtsender und den Lichtempfänger für die beiden Glasfasern der Übertragungsstrecke enthalten, sondern auch die übrigen Schaltungen zur Verarbeitung der über die Schnittstelle 23, 25 bzw. 33, 35 übertragenen Steuerinformationen, die sich im wesentlichen nur in den im Monitor-Kanal übertragenen Informationen bei einer Kupferleitungsverbindung unterscheiden.

Eine Änderung der Aufteilung der Anpassungsschaltungen in Teilanordnungen ist nicht ohne weiteres möglich, da die Funktionen der zweiten Teilanordnungen 22 bzw. 32 und der Datenaufbau bzw. die Rahmenstruktur der Daten auf der Schnittstelle zwischen den beiden Teilanordnungen jeweils einer Anpassungsschaltung praktisch festgelegt ist.

In Fig. 1b ist nun eine Anordnung dargestellt, bei der die erste, der Übertragungsstrecke zugewandte Teilanordnung jeweils in zwei Unterteilanordnungen 42 und 44 bzw. 46 und 48 aufgeteilt ist, die untereinander durch eine zweite Schnittstelle mit den Leitungen 41 und 43 bzw. 47 und 49 verbunden sind. Über diese zweite Schnittstelle werden die Informationen in der Form, d.h. in einer derartigen Anordnung der Datenwörter als binäres Signal übertragen, wie anschließend die Datenwörter auch über die Über tragungsstrecke 40 übertragen werden. In der Unterteilanordnung 44 bzw. 46 findet also keine Umsetzung der Folge der Informationsdaten statt, sondern lediglich eine Anpassung an das jeweilige Medium der Übertragungsstrecke, z.B. an Kupferkabel oder Glasfaserleitungen oder Ähnliches.

Bei der ersten Schnittstelle zwischen z.B. der Teilanordnung 22 und der Unterteilanordnung 42 wird die Rahmenstruktur der über die Leitungen 23 bzw. 25 übertragenen Daten durch zusätzliche Signale über getrennte Leitungen gesteuert. Derartige zusätzliche Steuersignale über gesonderte Leitungen sollen bei der zweiten Schnittstelle vermieden werden, so daß andere Maßnahmen zur Angabe der Rahmenstruktur, d.h. zur Rahmensynchronisation, erforderlich sind. Diese bestehen darin, daß in die über die zweite Schnittstelle übertragenen Daten eine gesonderte Synchronisierinformation eingefügt ist, die in der Unterteilanordnung 42 erzeugt und von der Unterteilanordnung 48 ausgewertet wird oder umgekehrt. Da andererseits die Information des Monitorkanals nicht über die Übertragungsstrecke übertragen werden muß, ist diese bei der zweiten Schnittstelle weggelassen. Die über die zweite Schnittstelle übertragenen Daten haben somit eine Rahmenstruktur, wie in Fig. 2 unten dargestellt ist.

Wie daraus zu erkennen ist, sind jeweils zwei Rahmen mit den beiden Kanälen B1 und B2 und dem Steuerkanal D/C der ersten Schnittstelle in jeweils einen Rahmen der zweiten Schnittstelle umgesetzt, der somit die doppelte Zeitdauer der ersten Rahmen hat. Dieser zweite Rahmen enthält also ein Synchronisierwort S sowie je zwei Datenwörter der Kanäle B1, B2 und D/C. Zwischen jeweils zwei Datenwörtern sowie zwischen diesen und dem Synchronisierwort ist jeweils ein Füllbit F mit einem bestimmten binären Wert eingefügt. Ferner ist das Synchronisierwort S ein Bit länger als die Datenwörter, nämlich neun Bit lang. Zusammen mit den sechs Datenwörtern von je acht Bit und den sieben Füllbits F ergibt sich also eine Anzahl Informationsbit in einem unteren Rahmen, die gleich der Anzahl Informationsbit in den zwei oben in Fig. 2 dargestellten Rahmen ist, so daß am Eingang und am Ausgang der zweiten Teilanordnung 42 bzw. 48, d.h. auf beiden Schnittstellen, die Bitfrequenz gleich ist.

Die Füllbits F haben alle den gleichen binären Wert, beispielsweise den binären Wert "1", während alle Bits des Synchronisierworts S den entgegengesetzten binären Wert haben, d.h. hier den binären Wert "0". Dadurch ist das Synchronisierwort S eindeutig, d.h. es kann beim Empfang sofort erkannt werden, indem eine Folge von neun Bits mit dem Wert "0", eingeschlossen von je einem Bit mit dem Wert "1", gesucht wird. Eine derartige Folge kann durch die Information der übrigen Kanäle nicht vorgetäuscht werden, denn in jedem Kanal kann nur ein Datenwort mit maximal acht Bit mit dem binären Wert "0", auftreten, danach erscheint in jedem Falle ein Füllbit mit dem binären Wert "1". Da das Synchronisierwort am Beginn eines Rahmens steht, können also die Datenwörter im ersten ausgesandten Rahmen zu Beginn einer Übertragung eindeutig ermittelt und zugeordnet werden.

Die der Übertragungsstrecke 40 zugeordneten Unterteilanordnungen 44 und 46 müssen lediglich die zugeführten Informationen der zweiten Schnittstelle umsetzen in die für das Übertragungsmedium geeigneten Signale bzw. umgekehrt die vom Übertragungsmedium empfangenen Signale in binäre elektrische Signale. Im Falle einer Glasfaserverbindung als Übertragungsstrecke 40 enthalten die Anordnungen 44 und 46 je mindestens eine Laserdiode, die auch im nicht angesteuerten Zustand eine erhebliche Energie verbraucht und Wärme erzeugt. Um diese Energie in den Pausen einzusparen, in denen keine Übertragung stattfindet, ist zusätzlich noch eine Verbindung 45 von der zweiten Unterteilanordnung 42 zur ersten Unterteilanordnung 44 vorgesehen, und entsprechend eine Leitung 51 von der Anordnung 48 zur Anordnung 46. Über diese Leitungen wird vor Beginn der Übertragung ein Aktivierungssignal an die Anordnung 44 bzw. 46 übertragen, um darin die Laserdiode einzuschalten bzw. auf ihren normalen Arbeitspunkt einzustellen. Falls die Übertragungsstrecke 40 beispielsweise aus einer Kupferleitung besteht, wird durch das Aktivierungssignal auf der Leitung 45 bzw. 51 der Leitungstreiber eingeschaltet und auf seinen Arbeitspunkt eingestellt.

In Fig. 3 ist ein Ausführungsbeispiel einer zweiten Unterteilanordnung, beispielsweise der Unterteilanordnung 42 in Fig. 1b, in Form eines groben Blockschaltbildes angegeben. Über die Leitung 23 werden die Informationen in einer Rahmenstruktur zugeführt, wie diese in Fig. 2 oben angegeben ist. Diese werden einer Speicher- und Multiplexeranordnung 60 zugeführt, wo mindestens ein Teil der Daten von zwei aufeinanderfolgenden Rahmen abgetrennt und zwischengespeichert wird, der anschließend über die Leitung 41 in der in Fig. 2 unten dargestellten Rahmenstruktur abgegeben wird. Sofern in den über die Leitung 23 zugeführten Informationen Steuerdaten enthalten sind, werden diese über eine Verbindung 65 einer zentralen Steuereinheit 68 zugeführt, die die Protokollverwaltung steuert. Der Block 62 stellt einen Synchronisierwortgenerator dar, der das Synchronisierwort S am Beginn jedes Rahmens der ausgehenden Daten erzeugt. Ferner ist noch eine zentrale Taktsteueranordnung 64 vorgesehen, die von der vorgeschalteten Teilanordnung, d.h. der Teilanord nung 22 in Fig. 1b, über die Leitung 63 ein Rahmentaktsignal,das die Rahmenstruktur bzw. den Rahmenbeginn der Daten auf der Leitung 23 angibt, sowie über die Leitung 69 ein Bittaktsignal empfängt. Die von dieser Anordnung 64 zu den anderen Anordnungen 60, 62 usw. ausgehenden Taktleitungen sind der Übersichtlichkeit halber in Fig. 3 nicht näher dargestellt.

Die über die Leitung 43 aus der ersten Unterteilanordnung, d.h. der Anordnung 44 in Fig. 1b, empfangenen Daten werden einem Synchronisierwortdetektor 72 zugeführt, der bei Erkennung des Synchronisierwortes ein entsprechendes Synchronisiersignal über die Leitung 73 der zentralen Steueranordnung 68 zuführt. Ferner werden die über die Leitung 43 zugeführten Daten einem elastischen Speicher 66 zugeführt, der die Daten so weit verzögert, daß die über die Leitung 25 abgegebenen Daten in ihrer Rahmenstruktur zeitlich mit dem Rahmentakt auf der Leitung 63 übereinstimmen. Die so synchronisierten Daten werden einer Multiplexanordnung 70 zugeführt, wo beispielsweise das Synchronisierwort und die Füllbits ausgeblendet werden und nur die Datenwörter der beiden Nutzkanäle B1 und B2 sowie des Steuerkanals D/C, ergänzt um Daten für den Monitor-Kanal M, auf der Leitung 25 an die folgende Teilanordnung weitergeleitet werden. Die Daten des Monitorkanals werden von der zentralen Steuereinheit 68 erzeugt und über die Leitung 71 mit dem Multiplexer 70 zugeführt, während andererseits aus den über die Leitung 43 empfangenen Daten zumindest ein Teil der Steuerdaten über die Verbindung 71 an die zentrale Steuereinheit 68 übergeben werden. In der Anordnung 74 ist eine Zeitüberwachungssteuerung vorhanden, die insbesondere bei Beginn einer Übertragung den Zeitablauf überwacht und beispielsweise bei Ausfall der Daten einen ordnungsgemäßen Übertragungsabschluß gewährleistet.

Die zentrale Steuereinheit 68 wertet die Steuerdaten von beiden Schnittstellen aus, d.h. sowohl die über die Leitung 23 als auch die über die Leitung 43 empfangenen Steuereinheiten innerhalb der jeweiligen Rahmenstruktur. Mit dieser Auswertung werden teils einige Funktionen innerhalb der Unterteilanordnung 42 gesteuert und ggf. umgeformte Steuerdaten in die jeweils ausgehenden Datenströme eingefügt, und außerdem werden bei bestimmten Steuerinformationen Steuersignale an Ausgängen 51 und 55 erzeugt. Wie aus Fig. 1b hervorgeht, dient das Steuersignal am Ausgang 51 bzw. das entsprechende Steuersignal am Ausgang 45 der Unterteilanordnung 42 dazu, in der Unterteilanordnung 46 bzw. 44 die Sendeanordnung sowie ggf. weitere, wesentliche Energie verbrauchende Elemente einzuschalten. Mit dem Steuersignal am Ausgang 55 können weitere Steuerfunktionen ausgelöst werden, wie später weiter erläutert wird.

Ferner enthält die in Fig. 3 dargestellte Unterteilanordnung eine Fehlerbehandlungseinrichtung 76, die insbesondere einen Fehlerzähler enthält. Dieser Zähler wird durch Fehlersignale weitergezählt, die über einen Eingang 53 zugeführt werden. Diese Fehlersignale kommen insbesondere von der zweiten Unterteilanordnung, z.B. durch Überwachung bestimmter Koderegeln im empfangenen Signal.

Die Einrichtung 76 ist über die Verbindung 75 mit der Multiplexanordnung 70 verbunden, und zwar wird ein Fehler-Steuersignal in den über die Leitung 43 empfangenen Daten dem Fehlerzähler zugeführt, um diesen weiterzuschalten, und umgekehrt kann der Inhalt des Zählers dem Multiplexer 70 zugeführt werden, um ihn über die ausgehende Leitung 25 der ersten Schnittstelle in ein Datenwort des Steuerkanals einzufügen. Dieses Einfügen erfolgt durch ein Steuerkommando in den über die Leitung 23 dem Multiplexer 60 zugeführten Daten, das der Fehlerbehandlungseinrichtung 76 über die Verbindung 61 zugeführt wird. Umgekehrt kann ein über den Eingang 53 zugeführtes Fehlersignal dem Fehlerzähler direkt oder dem Multiplexer 60 über die Verbindung 61 zugeführt werden, um ein entsprechendes Fehler-Steuersignal in den über die Leitung 41 ausgesendeten Daten einzufügen.

Ferner sind noch zwei weitere Eingänge 77 und 79 vorhanden, über die ein bestimmter Betriebsmodus der Unterteilanordnung 42 eingestellt werden kann. Es sind insgesamt drei Betriebsmodi vorgesehen, von denen der eine als EX-Modus für die Verwendung dieser Unterteilanordnung auf der Vermittlungsseite vorgesehen ist, wobei die Verarbeitung des Taktsignals entsprechend gesteuert wird und das Auslesen des Inhalts des Fehlerzählers und die Übertragung seines Inhalts möglich ist. Ein weiterer Betriebsmodus ist der NT-Modus, der für die Verwendung der ersten Unterteilanordnung auf der Teilnehmerseite vorgesehen ist und bei dem das Taktsignal aus den empfangenen Daten abgeleitet wird und ein Fehlersignal als FehlerSteuersignal im Steuerkanal der zweiten Schnittstelle übertragen wird. Im Monitor-Modus als drittem Betriebsmodus wird die Unterteilanordnung nach Fig. 3 im wesentlichen nur zum Auswerten von über die zweite Schnittstelle empfangenen Steuerkommandos und zum Erzeugen von Steuersignalen verwendet.

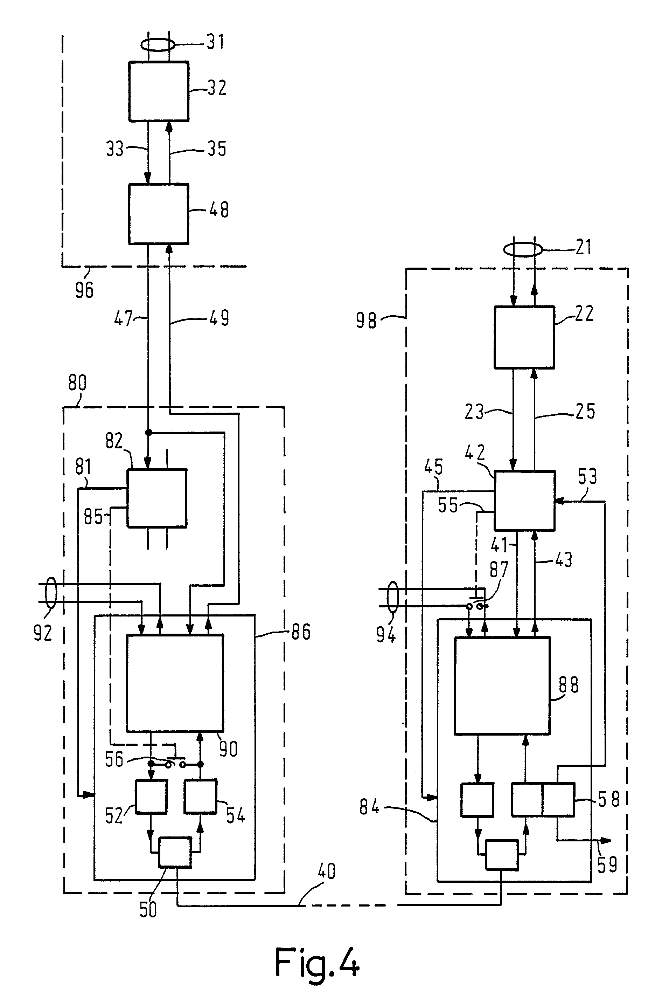

Dies soll anhand der Fig. 4 erläutert werden, die eine Anordnung gemäß Fig. 1b mit Erweiterungen und Abwandlungen schematisch darstellt. Von einer Vermittlungszentrale 96 sind lediglich für eine Leitung die zweite Teilanordnung 32, die von den nicht dargestellten Vermittlungseinrichtungen über die Verbindung 31 Daten erhält und dorthin liefert, sowie die zugehörige Unterteilanordnung 48 dargestellt, wobei beide Anordnungen über die beiden Verbindungen 33 und 35, die die erste Schnittstelle darstellen, miteinander verbunden sind. Die beiden Verbindungen 47 und 49, die die zweite, binäre Schnittstelle darstellen, führen auf eine Leitungsabschlußeinheit 80. Darin ist u.a. eine zweite Unterteilanordnung 86 vorhanden, die mit dieser zweiten Schnittstelle verbunden ist und die optischen Signale für die Glasfaserstrecke 40 erzeugt bzw. die empfangenen optischen Signale verarbeitet.

Da eine Glasfaser eine erheblich höhere Bandbreite hat als die in der Telefontechnik teilnehmerseitig bisher übliche Zweidrahtleitung, ist in der Unterteilanordnung 86 ein Multiplexer 90 vorgesehen, der die Daten der zweiten Schnittstelle mit den Leitungen 47 und 49 zeitlich mit Daten verschachtelt bzw. entschachtelt, die über eine Breitbandverbindung 92 zugeführt werden. Es ist auch möglich, daß mehrere, der zweiten Schnittstelle entsprechende Verbindungen mit einem Breitbandsignal im Multiplexer 90 zeitverschachtelt werden. Die zeitverschachtelten Daten werden dem optischen Sender zum Erzeugen eines optischen Signals zugeführt, das über eine symbolisch dargestellte optische Gabelanordnung 50 in eine Glasfaser 40 eingespeist wird. Die in der umgekehrten Richtung über die Glasfaser empfangenen optischen Signale werden über die Gabelanordnung 50 dem Empfänger 54 zugeführt und dort in ein elektrisches Signal umgesetzt. Statt der optischen Gabelanordnung 50 können auch zwei getrennte Glasfasern für jede Richtung verwendet werden.

Die Leitungsabschlußeinheit 80 enthält außerdem eine Unterteilanordnung 82, die wie die Unterteilanordnung 48 bzw. die in Fig. 3 dargestellte Anordnung aufgebaut ist, hier jedoch im Monitor-Modus betrieben wird, d. h. sie empfängt lediglich die über die Verbindung 47 übertragenen Daten und wertet darin die Steuerinformation im Steuerkanal aus. Insbesondere wird aus dieser Steuerinformation zum einen über einen dem Ausgang 51 in Fig. 3 entsprechenden Ausgang der Anordnung 82 auf der Leitung 81 ein Aktivierungssignal erzeugt, das insbesondere den optischen Sender 52 in der Unterteilanordnung 86 einschaltet. Bei einer anderen Steuerinformation wird über die Leitung 85 ein Signal erzeugt, das Eingangs- und Ausgangsleitung des Multiplexers 90 miteinander verbindet, so daß beispielsweise von der Vermittlungsstelle 96 geprüft werden kann, ob die Übertragungsstrecke über die zweite Schnittstelle und den Multiplexer hindurch funktionsfähig ist, so daß ein gemeldeter Fehler dann dahinter liegen muß.

Die Glasfaserstrecke 40 endet teilnehmerseitig in einer Unterteilanordnung 84, die entsprechend wieder eine optische Gabelanordnung, einen optischen Sender und einen optischen Empfänger aufweist. Ferner ist eine an den letzteren angeschlossene Taktrückgewinnungsschaltung 58 angedeutet, die über die Leitung 59 ein Taktsignal erzeugt, das in der gesamten teilnehmerseitigen Anschlußeinheit 98 verwendet wird. Bei der vermittlungsseitigen Anschlußeinheit 80 wird ein entsprechendes Taktsignal von der Vermittlungsstelle 96 geliefert.

Die Einheit 58 überwacht ferner die empfangenen Daten auf Fehler, beispielsweise auf Verletzung von Koderegeln, und erzeugt im Fehlerfall ein Fehlersignal, das der Unterteilanordnung 42 zugeführt wird. Diese ist ferner über die Leitungen 41 und 43, die die zweite Schnittstelle darstellen, mit einem Multiplexer 88 verbunden, wo diese Daten in entsprechender Weise wie in der vermittlungsseitigen Anschlußeinheit 80 mit einem Breitbandsignal über die Verbindung 94 zeitverschachtelt bzw. entschachtelt wird. Über die Leitung 41 wird in einem Steuerkanal ein über den Eingang 53 zugeführtes Fehlersignal als FehlerSteuersignal über den Multiplexer 88, die Glasfaserverbindung 40 und den Multiplexer 90 bis zur Unterteilanordnung 48 übertragen, wo mit diesen Fehler-Steuersignalen ein Fehlerzähler weitergezählt wird. Dessen Inhalt kann, wie früher beschrieben, über die Leitung 35 zur Teilanordnung 32 übertragen und dort ausgewertet werden.

Die Unterteilanordnung 42 ist über die Leitungen 23 und 25, die die erste Schnittstelle darstellen, mit der teilnehmerseitigen Teilanordnung 22 verbunden, die über die Verbindung 21 zu den Teilnehmern führt.

Da die Unterteilanordnung 42 in der Nähe der optischen Sender und Empfänger angeordnet ist, kann diese hier auch die erforderlichen Steuersignale erzeugen. Auf der Leitung 45 wird ein Aktivierungssignal erzeugt, das wie vorher beschrieben insbesondere den optischen Sender in der Unterteilanordnung 84 einschaltet, und über die Leitung 55 kann ein Schalter 87 geschlossen werden, der das Breitbandsignal auf der Verbindung 94 in einer geschlossenen Schleife schaltet, um in einem Fehlerfalle festzustellen, ob ein Fehler in dieser Breitbandverbindung bereits vor oder erst hinter dem Multiplexer 88 liegt. Der Schalter zur Bildung einer geschlossenen Schleife ist hier nur beispielsweise angegeben und kann auch im Bedarfsfall an einer anderen Stelle angeordnet werden.

In der in Fig. 4 dargestellten Anordnung ist also die Unterteilanordnung 42 in den NT-Modus geschaltet, in dem u.a. ein über den Eingang 53 zugeführtes Fehlersignal in ein Fehler-Steuersignal im Datenstrom auf der Leitung 41 umgesetzt wird und im übrigen auch die in Fig. 3 dargestellte Zeitüberwachungsschaltung 74 eingeschaltet wird, während die vermittlungsseitige Unterteilanrodnung 48 im EX-Modus geschaltet ist, wo empfangene Fehler-Steuersignale gezählt werden. Im übrigen können darin auch Fehlersignale, die in der hier nicht dargestellten, mit dem optischen Empfänger 54 verbundenen Taktwiederherstellungsschaltung erzeugt werden, gezählt werden. Dies ist jedoch nur zweckmäßig, wenn die räumliche Entfernung zwischen der Vermittlungsstelle 96 und der Leitungsanschlußeinheit 80 nicht groß ist. Anderenfalls wäre es auch möglich, daß ein Fehlersignal der Untereinheit 82, die in den Monitor-Betriebsmodus geschaltet ist, zugeführt wird und dort an der entsprechenden Stelle im Steuerkanal ein Fehler-Steuerbit erzeugt, wofür dann die ausgehende Leitung der zweiten Schnittstelle der Unterteilanordnung 82 angeschlossen sein müßte. Durch die verschiedenen vorgesehenen Möglichkeiten der Unterteilanordnungen 42, 48 und 82 können also verschiedene Konfigurationen verwendet werden.

**Ansprüche**

1. Schaltungsanordnung zum Übertragen von Informationen zwischen mindestens einer Teilnehmer-Anschlußstelle und einer Vermittlungsstelle über eine Übertragungsstrecke, die über Anpassungsschaltungen an die Anschlußstelle und an die Vermittlungsstelle angeschlossen ist, wobei die Anpassungsschaltungen je aus zwei Teilanordnungen bestehen, die über eine einheitliche erste Schnittstelle miteinander verbunden sind und von denen die erste, der Übertragungsstrecke zugewandte Teilanordnung für beide Anpassungsschaltungen im wesentlichen gleich ist und die physikalische Anpassung an das Übertragungsmedium enthält,

dadurch gekennzeichnet, daß die erste Teilanordnung aus zwei Unterteilanordnungen (42, 44 bzw. 84; 46 bzw. 86, 48) besteht, die über eine zweite Schnittstelle (41, 43; 47, 49) miteinander verbunden sind und von denen die erste Unterteilanordnung (42; 48) die Informationen von der ersten Schnittstelle (23, 25; 33, 35) in ein binäres Sendesignal für die zweite Schnittstelle (41, 43; 47, 49) und ein binäres Empfangssignal der zweiten Schnittstelle in die für die erste Schnittstelle erforderliche Form umsetzt und die zweite Unterteilanordnung (44, 46; 84, 86) spezifisch für das Übertragungsmedium (40) ausgebildet ist und mit dem binären Sendesignal der zweiten Schnittstelle das Übertragungsmedium ansteuert und aus den Signalen des Übertragungsmediums die binären Empfangssignale für die zweite Schnittstelle bildet.

2. Schaltungsanordnung nach Anspruch 1, wobei die über die erste Schnittstelle übertragenen Informationen in aufeinanderfolgenden ersten Rahmen mit je mehreren Datenwörtern gegliedert ist, die je einen Informationskanal bilden, von denen mindestens ein Kanal als Steuerkanal Steuerinformationen enthält,
dadurch gekennzeichnet, daß die erste Unterteilanordnung (42; 48) die über die erste Schnittstelle (23, 25; 33, 35) übertragene Information für die zweite Schnittstelle (41, 43; 45, 47) in vom ersten Rahmen abweichende zweite Rahmen umsetzt, deren Länge je ein Vielfaches der Länge eines ersten Rahmens beträgt und in dem zumindest ein Teil der Steuerinformation (M) unterdrückt ist und in dem an mindestens einer vorgegebenen Stelle eine Synchronisierinformation (S) enthalten ist.

3. Schaltungsanordnung nach Anspruch 2, wobei der erste Rahmen zwei Nutzkanäle und zwei Steuerkanäle mit je gleich langen Datenwörtern enthält, von denen der eine Steuerkanal erste Steuerinformation zur Steuerung vorgegebener Funktionen der ersten Teilanordnung überträgt,
dadurch gekennzeichnet,
daß die Länge des zweiten Rahmens ein ganzzahliges Vielfaches der Länge des ersten Rahmens ist und je dieses Vielfache der Datenwörter der Nutzkanäle und des anderen Steuerkanals sowie Synchronisierinformationen enthält.

4. Schaltungsanordnung nach Anspruch 3,
dadurch gekennzeichnet, daß zwischen je zwei aufeinanderfolgenden Datenwörtern sowie zwischen diesen und einem in jedem Rahmen gleichen Synchronisierwort ein Bit mit dem einen binären Wert eingefügt ist und daß das Synchronisierwort mindestens ein Bit länger ist als jedes Datenwort und nur Bits des anderen binären Werts aufweist.

5. Schaltungsanordnung nach einem der Ansprüche 1 bis 4,
dadurch gekennzeichnet, daß die erste Unterteilanordnung (42; 48) bei einer ersten vorgegebenen Steuerinformation im Steuerkanal ein Aktivierungssignal an einem getrennten Anschluß (51) erzeugt und auf einer weiteren Verbindung (45; 51) an die zweite Unterteilanordnung (44, 46; 84, 86) überträgt, insbesondere zum Einschalten von darin enthaltenen Sendeanordnungen.

6. Schaltungsanordnung nach Anspruch 5,
dadurch gekennzeichnet, daß die erste Unterteilanordnung (42, 48) bei zweiten vorgegebenen Steuerinformationen im Steuerkanal mindestens ein weiteres Steuersignal erzeugt und an einem weiteren getrennten Anschluß (55) abgibt.

7. Schaltungsanordnung nach einem der Ansprüche 1 bis 6,

dadurch gekennzeichnet, daß die erste Unterteilanordnung in einen Monitor-Betriebsmodus schaltbar ist zum Auswerten ausschließlich der Empfangssignale der zweiten Schnittstelle (41; 47).

8. Schaltungsanordnung nach einem der Ansprüche 1 bis 7,
dadurch gekennzeichnet, daß die erste Unterteilanordnung (42, 48) einen gesonderten Fehlereingangsanschluß (53) und einen Fehlerzähler (76) aufweist, der mindestens von der zweiten Unterteilanordnung (84) bei detektierten Übertragungsfehlern darin erzeugte Fehlersignale über den gesonderten Fehlereingang (53) empfängt und zählt und dessen Zählerinhalt durch dritte vorgegebene, über die erste Schnittstelle (23, 25; 33, 35) empfangene Steuerinformation über den Steuerkanal dieser Schnittstelle auslesbar und löschbar ist.

9. Schaltungsanordnung nach einem der Ansprüche 1 bis 7,
dadurch gekennzeichnet, daß die erste Unterteilanordnung (42, 48) einen Fehlerzähler (76) aufweist, der mindestens jedes über die zweite Schnittstelle (43; 49) empfangene Fehler-Steuersignal zählt und dessen Zählerinhalt durch dritte vorgegebene, über die erste Schnittstelle (23, 25; 33, 35) empfangene Steuerinformation über den Steuerkanal dieser Schnittstelle auslesbar und löschbar ist.

10. Schaltungsanordnung nach Anspruch 8 oder 9,
dadurch gekennzeichnet, daß nur ein Fehlerzähler (76) vorgesehen ist, der sowohl Fehlersignale als auch Fehler-Steuersignale zählt.

11. Schaltungsanordnung nach einem der vorhergehenden Ansprüche,
dadurch gekennzeichnet, daß die erste Unterteilanordnung (42, 48) außer in den Monitor-Betriebsmodus in einen von zwei weiteren Betriebsmodi schaltbar ist, wobei im EX-Modus als dem einen weiteren Betriebsmodus der Fehlerzähler (76) weiter schaltbar und auslesbar ist und in einem NT-Modus als dem anderen weiteren Betriebsmodus ein von der zweiten Unterteilanordnung (84) zugeführtes Fehlersignal in ein Fehler-Steuersignal im Steuerkanal der zweiten Schnittstelle (41, 43) umsetzbar ist.

Fig.1a

Fig.1b

Fig.2

Fig.3

1–Ⅱ–PHD 88–130

Fig.4